# EUROPEAN PATENT APPLICATION

(11) **EP 3 043 274 A1**
(43) Date of publication of application: **13.07.2016**
(21) Application number: 15198481.2
(22) Date of filing: 08.12.2015
(51) Int. Cl.: G06F 17/50

(54) **APPARATUS AND METHOD OF GENERATING 3D CAD MODEL OF PIPE SUPPORT BASED ON PIPE THERMAL MOVEMENT**

(30) Priority: 07.01.2015 KR 20150002029
(71) Applicant: Kepco Engineering & Construction Company, Inc., Gimcheon-si Gyeongsangbuk-do 39660 (KR)
(72) Inventor: CHA, Su Nam, 16973 Gyeonggi-do (KR)
(74) Representative: Merryweather, Colin Henry

(57) **Abstract**

Provided are an apparatus and method of generating a three-dimensional (3D) computer-aided design (CAD) model of a pipe support based on thermal movement, and more particularly, an apparatus and a method of generating a 3D CAD model of a pipe support by generating a longitudinal displacement database from a pipe stress analysis result and reflecting a longitudinal displacement according to thermal movement by linking the longitudinal displacement database with a 3D model of the pipe support. Accordingly, a longitudinal displacement database of the pipe support in a driving state is automatically generated, unlike in a 3D CAD system according to the prior art, so that interference with peripheral structures may be checked in advance. Thus, errors that may be generated due to manual input and checking may be prevented, and a precise and reliable 3D CAD model of the pipe support, to which the thermal movement is applied, may be generated. Accordingly, a power plant may be designed to operate stably.

## Description

This application claims the benefit of Korean Patent Application No. 10-2015-0002029, filed on January 7, 2015, in the Korean Intellectual Property Office, the disclosure of which is incorporated herein in its entirety by reference.

One or more exemplary embodiments relate to an apparatus and a method of generating a three-dimensional (3D) computer-aided design (CAD) model of a pipe support based on thermal movement, and more particularly, to an apparatus and a method of generating a 3D CAD model of a pipe support by generating a longitudinal displacement database from a pipe stress analysis result and reflecting a longitudinal displacement according to thermal movement by linking the longitudinal displacement database with a 3D model of the pipe support.

A three-dimensional (3D) computer-aided design (CAD) system of a pipe support is a system for generating a 3D CAD model based on data about a shape and dimensions to which a catalog of a manufacturer that is necessary for designing a power plant is applied, checking for interference, and generating drawings and products.

A commercial 3D CAD program according to the prior art is used to generate a 3D CAD model only by taking into account an installation state to which a temperature of fluid in a pipe is not applied, and thus, may not provide a method of checking for interferences between a pipe support and peripheral pipes and peripheral structures at a design stage, wherein the pipe support generates a longitudinal displacement in an uncertain (X, Y, or Z) direction according to a fluid temperature in the pipe in an actual driving state. That is, the commercial 3D CAD system according to the prior art may generate the pipe support model in an installation state, but does not support a 3D CAD model of the pipe support that generates the longitudinal displacement according to the temperature of fluid flowing in the pipe during driving.

A pipe stress analysis program is a program for evaluating an integrity of the pipe by calculating a weight, displacement, stress, and vibrations of the pipe in consideration of a pressure and a temperature of the pipe, based on codes and standards necessary for designing power plants.

According to a current method of checking for interferences between the pipe support and peripheral structures in consideration of the longitudinal displacement, it takes much effort and time to perform the checking because a longitudinal displacement dimension of a part that is expected to interfere with the peripheral structure of the pipe support is searched for in a large-sized pipe analysis result file based on pipe stress analysis results obtained by a pipe stress analysis program, and then, a corresponding location is searched for in a 3D CAD model, a two-dimensional (2D) pipe arrangement, and detailed drawings and distances to peripheral structures have to be calculated and compared one by one. Thus, it may be impossible to check for interferences with the peripheral structures with respect to all pipes.

In addition, a 3D CAD system and the pipe stress analysis program have their own file formats, and thus, the longitudinal displacement analysis results of the pipe stress analysis program may not be directly applied to the 3D CAD system of the pipe support.

One or more exemplary embodiments include an apparatus and a method of automatically generating a three-dimensional (3D) computer-aided design (CAD) model of a pipe support, to which a longitudinal displacement caused by a thermal movement is applied, by extracting longitudinal displacement database from a pipe stress analysis result and linking the longitudinal displacement database to a 3D model of the pipe support, in order to generate a 3D CAD model of the pipe support to which the longitudinal displacement caused by the thermal movement during a driving state is applied, which is not supported by the 3D CAD system of the pipe support according to the prior art.

One or more exemplary embodiments include linking a pipe stress analysis result file to generation of 3D CAD model regardless of a kind of a pipe stress analysis program, to address lacking of compatibility between various pipe stress analysis programs and pipe support 3D CAD system.

Additional aspects will be set forth in part in the description which follows and, in part, will be apparent from the description, or may be learned by practice of the presented embodiments.

According to one or more exemplary embodiments, there is provided an apparatus for generating a three-dimensional (3D) computer-aided design (CAD) model of a pipe support, the apparatus including: a longitudinal displacement data generator configured to receive a pipe stress analysis result file, and generate a longitudinal displacement database of the pipe support according to a location of the pipe support, a kind of the pipe support, and thermal movement from the pipe stress analysis result file; and a thermal movement CAD generator configured to generate a 3D CAD model of the pipe support, to which the thermal movement is applied, by moving a 3D model of the pipe support based on values in the longitudinal displacement database.

The pipe stress analysis result file may include a name of a stress analysis program, and information about the location and the kind of the pipe support and the thermal movement of the pipe.

The longitudinal displacement data generator may include: a structure identifier configured to identify the stress analysis program by using a name of the stress analysis program and identify a structure of the pipe stress analysis result file according to an identified stress analysis program; and a database generator configured to generate the longitudinal displacement database including information about a serial number of the pipe support, a kind of the pipe support, south-north thermal movement, east-west thermal movement, and height thermal movement, by searching the pipe stress analysis result file for the location, the kind, and the thermal movement of the pipe support.

The thermal movement CAD generator may include: a model selector configured to select a 3D model of the pipe support, to which the thermal movement is to be applied; a movement identifier configured to extract a serial number of the pipe support, which is equal to a serial number of the pipe support of the selected 3D model, from the longitudinal displacement database, and identify a movement type and a movement section of the pipe support with reference to the longitudinal displacement database; and a thermal movement calculator configured to generate a 3D CAD model of the pipe support, to which the thermal movement is applied, by moving the movement type and the movement section of the 3D model according to the thermal movement included in the longitudinal displacement database.

According to one or more exemplary embodiments, there is provided a method of generating a three-dimensional (3D) computer-aided design (CAD) model of a pipe support based on thermal movement, the method including: receiving a pipe stress analysis result file to generate a longitudinal displacement database of the pipe support, based on a location and a kind of the pipe support and thermal movement in the input pipe stress analysis result file; and generating a 3D CAD model of the pipe support based on the thermal movement, by moving a 3D model of the pipe support based on values included in the longitudinal displacement database.

According to one or more exemplary embodiments, there is provided a computer program comprising computer readable code that is executable by a computer system and is arranged, when so executed, to perform the method described above. The computer program may be stored on a non-transitory computer-readable recording medium.

These and/or other aspects will become apparent and more readily appreciated from the following description of the embodiments, taken in conjunction with the accompanying drawings in which:
FIG. 1 is a block diagram of an apparatus for generating a three-dimensional (3D) computer-aided design (CAD) model of a pipe support, reflecting a thermal movement, according to an exemplary embodiment;
FIGS. 2 to 4 are flowcharts illustrating a method of generating a 3D CAD model of a pipe support, reflecting thermal movement, according to an exemplary embodiment;
FIG. 5 is a diagram exemplarily showing a longitudinal displacement database of a pipe support, according to an exemplary embodiment; and
FIG. 6 is a diagram illustrating a process of moving a 3D model of a pipe support according to thermal displacement.

As the inventive concept allows for various changes and numerous embodiments, particular embodiments will be illustrated in the drawings and described in detail in the written description. However, this is not intended to limit the inventive concept to particular modes of practice, and it is to be appreciated that all changes, equivalents, and substitutes that do not depart from the spirit and technical scope are encompassed in the inventive concept.

While such terms as "first," "second," etc., may be used to describe various components, such components must not be limited to the above terms. The above terms are used only to distinguish one component from another.

The terms used in the present specification are merely used to describe particular embodiments, and are not intended to limit the inventive concept. An expression used in the singular encompasses the expression of the plural, unless it has a clearly different meaning in the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the inventive concept will be described in detail by explaining preferred embodiments of the inventive concept with reference to the attached drawings. Like reference numerals in the drawings denote like elements. As used herein, the term "and/or" includes any and all combinations of one or more of the associated listed items. Expressions such as "at least one of," when preceding a list of elements, modify the entire list of elements and do not modify the individual elements of the list.

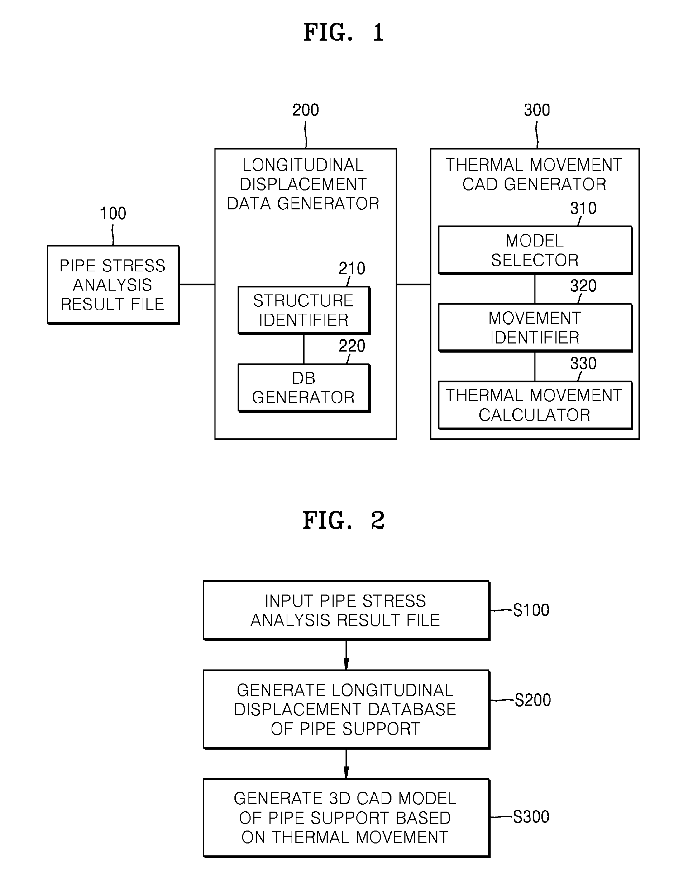

FIG. 1 is a block diagram of an apparatus of generating a three-dimensional (3D) computer-aided design (CAD) model of a pipe support reflecting thermal movement, according to an exemplary embodiment, and FIGS. 2 to 4 are flowcharts illustrating a method of generating a 3D CAD model of a pipe support reflecting thermal movement, according to an exemplary embodiment.

The method of generating the 3D CAD model of a pipe support reflecting thermal movement according to the exemplary embodiment is substantially the same as the apparatus of generating the 3D CAD model of the pipe support reflecting the thermal movement, according to the exemplary embodiment, and thus, the above method and the apparatus will be described together as follows.

Referring to FIG. 1, the apparatus for generating the 3D CAD model of the pipe support reflecting thermal movement according to the present exemplary embodiment includes a longitudinal displacement data generator 200 and a thermal movement CAD generator 300.

In general, a stress analysis program generates a result of analyzing stress as a file. When the stress in the pipe is analyzed by executing a general stress analysis program, a pipe stress analysis result file 100 of a text file format (.txt) is generated as a result so as to be opened in all kinds of document generating programs.

The pipe stress analysis result file 100 includes a program name, a location of a pipe support, a kind of the pipe support, and information about thermal displacement of the pipe. Structures and an order of data included in the pipe stress analysis result file 100 may vary depending on the kind of the stress analysis program.

The longitudinal displacement data generator 200 receives an input of the pipe stress analysis result file 100 (S100), and generates a longitudinal displacement database of the pipe support according to the location, the kind, and the thermal movement of the pipe support in the input file 100 (S200).

After that, the thermal movement CAD generator 300 moves a 3D model of the pipe support based on values in the longitudinal displacement database so as to generate a 3D CAD model of the pipe support, to which the thermal movement is applied (S300).

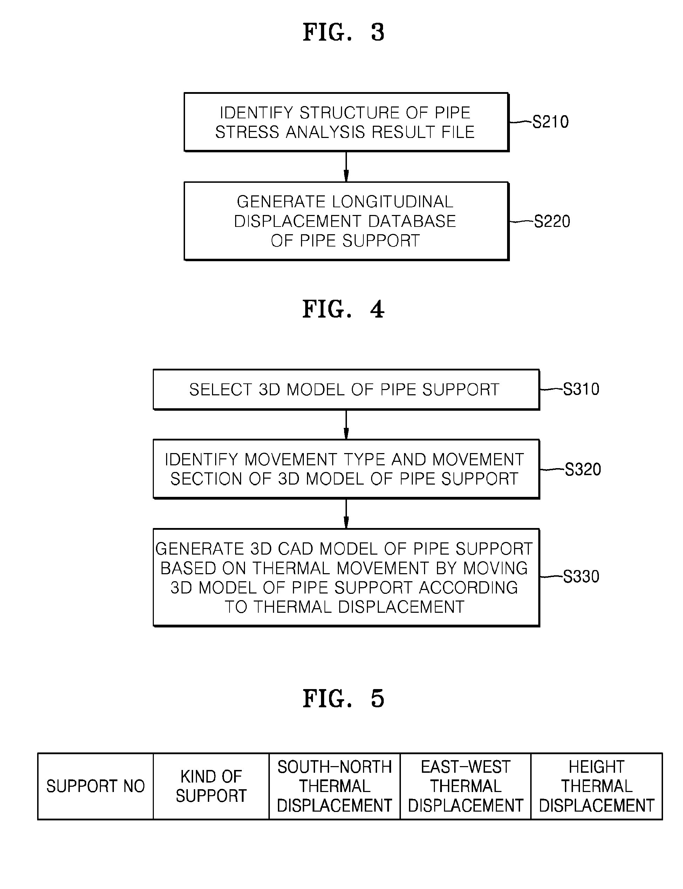

FIG. 5 is a diagram exemplarily showing a structure of the longitudinal displacement database of the pipe support.

The longitudinal displacement database (DB) of the pipe support includes database file of a text format including a serial number of the pipe support, a kind of the pipe support, south-north thermal movement, east-west thermal movement, and height thermal movement.

In the longitudinal displacement DB of the pipe support, a 3D CAD model of the pipe support to which the thermal movement is applied is automatically generated in connection with a 3D model of the pipe support, which will be described later, by using the serial number of the pipe support as a key value.

The longitudinal displacement data generator 200 includes a structure identifier 210 and a DB generator 220, and the thermal movement CAD generator 300 includes a model selector 310, a movement identifier 320, and a thermal movement calculator 330.

The structure identifier 210 distinguishes the stress analysis programs according to names thereof, and identifies the structure of the pipe stress analysis result file according to the distinguished program (S210).

After that, the DB generator 220 generates the longitudinal displacement DB including the serial number of the pipe support, the kind of the pipe support, the south-north thermal movement, east-west thermal movement, and height thermal movement by searching the pipe stress analysis result file for the location and kind of the pipe support, and the pipe thermal displacement (S220).

The model selector 310 selects a 3D model of the pipe support to which the thermal movement is to be applied (S310). The 3D model of the pipe support may a file of a neutral type such as ASCII.

After that, the movement identifier 320 extracts the serial number of the pipe support, which coincides with the serial number of the pipe support of the selected 3D model, from the longitudinal displacement DB, and identifies the movement type and movement section of the selected 3D model of the pipe support with reference to the longitudinal displacement DB (S320).

Here, the movement identifier 320 automatically identifies the movement type by searching the longitudinal displacement DB of the pipe support having the same serial number as that of the pipe support of the 3D model for the serial number of the pipe support, and identifies the movement section by automatically recognizing a center of the pipe, a center of the movement, an end point of the movement, and an end point of the pipe support that are input in the 3D model of the pipe support.

The thermal movement calculator 330 moves the identified movement type and the movement section according to the thermal movement of the longitudinal displacement DB so as to generate the 3D CAD model of the pipe support, to which the thermal movement is applied (S330).

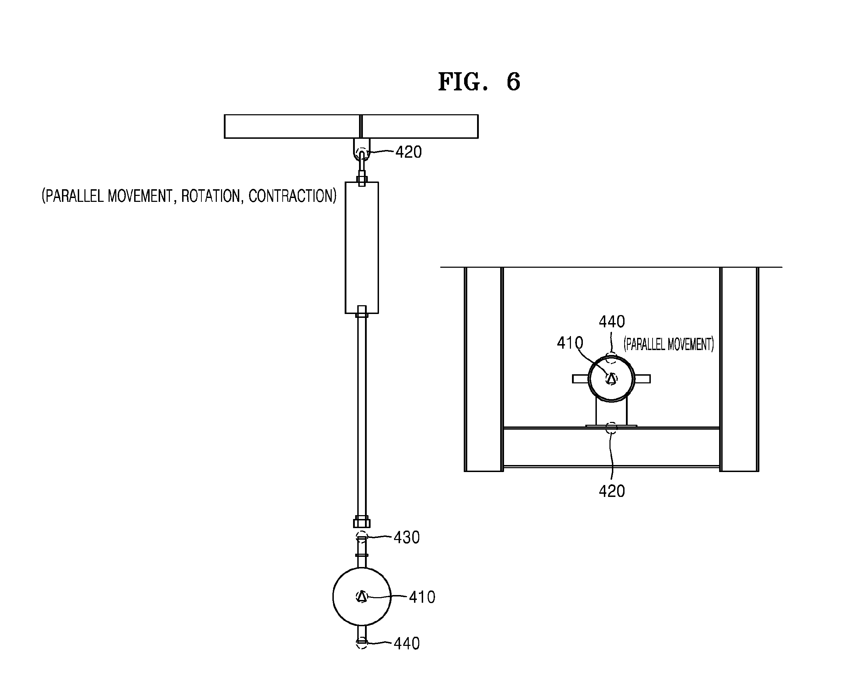

FIG. 6 is a diagram exemplarily showing a process of moving the 3D model of the pipe support according to the thermal movement.

As shown in a left side of FIG. 6, the thermal movement calculator 330 moves a center 410 of the pipe, an end point 430 of the movement, and an end point 440 of the pipe support in parallel as much as the thermal displacement included in the longitudinal displacement DB of the pipe support, and after that, the thermal movement calculator 330 may generate a line connecting the center 420 of the movement and the end point 430 of the movement and rotates and contracts the movement section so as to coincide the movement section with the line and generate the 3D CAD model of the pipe support, to which the thermal movement is applied.

In addition, as shown in a right side of FIG. 6, the pipe support having no end point 430 of the movement may be only moved in parallel to generate the 3D CAD model of the pipe support, to which the thermal movement is applied.

According to one or more exemplary embodiments, the longitudinal displacement DB of the pipe support in the driving state is automatically generated, unlike the 3D CAD system according to the prior art, so that the interferences with the peripheral structures may be checked in advance. Thus, errors that may generate due to manual input and checking may be prevented, and precise and reliable 3D CAD model of the pipe support, to which the thermal movement is applied, may be generated. Accordingly, a power plant may operate stably.

In addition, the 3D CAD model of the pipe support, to which the longitudinal displacement coordinates and the thermal movement are applied, may be generated without regard to the various kinds of the pipe stress analysis programs, and thus, compatibility of files may be obtained.

The inventive concept can also be embodied as a computer program which may comprise computer readable code which maybe stored on a non-transitory computer readable recording medium. The computer program is extendable on a computer system, which may be of any type. The non-transitory computer readable recording medium is any data storage device that can store data which can thereafter be read by a computer system. Examples of the non-transitory computer readable recording medium include read-only memory (ROM), random-access memory (RAM), CD-ROMs, magnetic tapes, floppy disks, optical data storage devices, etc. The non-transitory computer readable recording medium can also be distributed over network coupled computer systems so that the computer readable code is stored and executed in a distributive manner.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the invention as defined by the following claims.

## Claims

1. An apparatus for generating a three-dimensional (3D) computer-aided design (CAD) model of a pipe support, the apparatus comprising:
a longitudinal displacement data generator configured to receive a pipe stress analysis result file, and generate a longitudinal displacement database of the pipe support according to a location of the pipe support, a kind of the pipe support, and thermal movement from the pipe stress analysis result file; and
a thermal movement CAD generator configured to generate a 3D CAD model of the pipe support, to which the thermal movement is applied, by moving a 3D model of the pipe support based on values in the longitudinal displacement database.

2. The apparatus of claim 1, wherein the pipe stress analysis result file comprises a name of a stress analysis program, and information about the location and the kind of the pipe support and the thermal movement of the pipe.

3. The apparatus of claim 1 or 2, wherein the longitudinal displacement data generator comprises:
a structure identifier configured to identify the stress analysis program by using a name of the stress analysis program and identify a structure of the pipe stress analysis result file according to an identified stress analysis program; and
a database generator configured to generate the longitudinal displacement database including information about a serial number of the pipe support, a kind of the pipe support, south-north thermal movement, east-west thermal movement, and height thermal movement, by searching the pipe stress analysis result file for the location, the kind, and the thermal movement of the pipe support.

4. The apparatus of any one of the preceding claims, wherein the thermal movement CAD generator comprises:
a model selector configured to select a 3D model of the pipe support, to which the thermal movement is to be applied;
a movement identifier configured to extract a serial number of the pipe support, which is equal to a serial number of the pipe support of the selected 3D model, from the longitudinal displacement database, and identify a movement type and a movement section of the pipe support with reference to the longitudinal displacement database; and
a thermal movement calculator configured to generate a 3D CAD model of the pipe support, to which the thermal movement is applied, by moving the movement type and the movement section of the 3D model according to the thermal movement included in the longitudinal displacement database.

5. A method of generating a three-dimensional (3D) computer-aided design (CAD) model of a pipe support based on thermal movement, the method comprising:
receiving a pipe stress analysis result file to generate a longitudinal displacement database of the pipe support, based on a location and a kind of the pipe support and thermal movement in the input pipe stress analysis result file; and
generating a 3D CAD model of the pipe support based on the thermal movement, by moving a 3D model of the pipe support based on values included in the longitudinal displacement database.

6. The method of claim 5, wherein the pipe stress analysis result file comprises a name of a stress analysis program, and information about the location and the kind of the pipe support and the thermal movement of the pipe.

7. The method of claim 5 or 6, wherein the receiving of the pipe stress analysis result file comprises:
identifying a stress analysis program by using a name of the stress analysis program, and identifying a structure of the pipe stress analysis result file according to an identified program; and
generating the longitudinal displacement database including information about a serial number of the pipe support, a kind of the pipe support, south-north thermal movement, east-west thermal movement, and height thermal movement by searching the pipe stress analysis result file for the location, the kind, and the thermal movement of the pipe support.

8. The method of any one of the claims 5 to 7, wherein the generating of the 3D CAD model comprises:
selecting a 3D model of the pipe support, to which the thermal movement is to be applied;
extracting a serial number of the pipe support, which is equal to a serial number of the pipe support of the selected 3D model, from the longitudinal displacement database, and identifying a movement type and a movement section of the pipe support with reference to the longitudinal displacement database; and
generating a 3D CAD model of the pipe support, to which the thermal movement is applied, by moving the movement type and the movement section of the 3D model according to the thermal movement included in the longitudinal displacement database.

9. A computer program comprising computer readable code that is executable by a computer system and is arranged, when so executed, to perform the method of any one of claims 5 to 8.

10. A non-transitory computer-readable recording medium having stored thereon a computer program according to claim 9.
